Europäisches Patentamt

**(19)** European Patent Office

Office européen des brevets

**(11)** Publication number : **0 652 271 A1**

## **(12)** EUROPEAN PATENT APPLICATION

**(21)** Application number : **94308305.5**

**(22)** Date of filing : **10.11.94**

**(51)** Int. Cl.$^6$ : **C09K 7/00,** C09K 7/06, C09K 7/02

**(30)** Priority : **10.11.93 US 150217**

**(43)** Date of publication of application :
**10.05.95 Bulletin 95/19**

**(84)** Designated Contracting States :
**AT BE CH DE DK ES FR GB GR IE IT LI LU MC NL PT SE**

**(71)** Applicant : **BAKER-HUGHES INCORPORATED**
**3900 Essex Lane**
**Suite 1200**
**Houston Texas 77027-5115 (US)**

**(72)** Inventor : **Dye, William**
**10519 Prospect Hill**
**Houston, Texas 77064 (US)**
Inventor : **Clark, David E.**
**19107 Putting Green**
**Humble, Texas 77346 (US)**
Inventor : **Bland, Ronald G.**
**1808 Marshall**
**Houston, Texas 77098 (US)**

**(74)** Representative : **Cockbain, Julian, Dr.**
**Frank B. Dehn & Co.**
**Imperial House**
**15-19, Kingsway**
**London WC2B 6UZ (GB)**

**(54)** Well fluid additive.

**(57)** There is disclosed a well fluid additive comprising a fatty acid or derivative thereof, such as erucic acid, the additive being useful for reducing the lubricity of a well fluid. The additive can also include an emulsifying agent, such as a petroleum sulfonate. The additive can additionally include a non-water soluble alcohol component, such as a polyglycol or polyglycerol. Also disclosed is a method of reducing the lubricity of a well fluid by contacting the fluid with the above described additive. Also provided is a well fluid comprising water and the above described additive. Finally, there is disclosed a method of lubricating a well comprising contacting the well equipment with the above described well fluid.

EP 0 652 271 A1

The present invention relates to a well fluid additive, to a method of treating a well fluid, to a well fluid and to a method of treating well equipment, e.g. drilling, completion or workover equipment.

Hydrocarbons are found in subterranean formations and are produced through wells penetrating producing formations. Production of oil and gas is generally accomplished through the use of rotary drilling technology, which requires the drilling, completing and working over of wells.

The formation is composed of both inorganic and organic substances, such as clays and other minerals as well as fossils, peat etc. As the drill bit teeth penetrate the formation, drill chips are generated by the action of the bit. These drill chips are wetted by the drilling fluid which can produce sticky, plastic fragments. These fragments adhere to the bit surface and the force and weight of the bit extrudes the water from the plastic fragments forming a compacted mass of the formation on the bit surface that interferes with the cutting action of the bit teeth as evidenced by a reduction in penetration rate. Balling also occurs on drill collars and stabilizers, further interfering with drilling operations.

Bit balling, resulting in the compaction and adherence of drill chips to the face of the cutters and the bit, is a primary cause of reduction of penetration rate during drilling operations. Bit balling is believed to be the result of adhesive forces between shale and the bit surface which become significant when ductile shales deform and are forced into intimate contact with each other and the bit surface.

A liquid adheres to a solid surface if the attraction of the molecules to the solid surface is greater than their attraction to each other, i.e. the work of adhesion is greater than the work of cohesion. This criterion may be expressed thermodynamically as:

$$W_A = F_S + F_L - F_I$$

where $W_A$ is the work of adhesion; $F_S$ is the surface free energy of the solid; $F_L$ is the surface free energy of the liquid; and $F_I$ is the surface free energy of the newly formed interface. In terms of this expression, the work of cohesion, $W_C$, is equal to $xF_L$.

In order for adhesion to occur between the solid surface and a liquid, the work of adhesion must be greater than that of cohesion:

$$W_A - W_C = F_S - F_L - F_I$$

Accordingly, adhesion of the liquid to a solid occurs when the surface free energy of the solid surface exceeds that of the liquid and interface:

$$F_S > F_L + F_I$$

Shales adhere to bits and drill collars if they are forced into intimate contact by the force and weight of the drill string. The mechanism of adhesion in this instance is probably hydrogen bonding extending from the molecular layers of water adsorbed on the shale surface to the layer of water adhering to the water-wet steel surface of the bit.

In the past, those skilled in the art have particularly relied upon use of oil-based or water-in-oil (invert emulsions) drilling fluids to eliminate or control bit balling, although several aqueous-based fluids and additives have been contemplated by those skilled in the art. The environmental problems and costs associated with the use of oil-based or invert emulsion systems have discouraged and/or prohibited their use on many wells.

Applicants are aware of the following prior art relating to the general subject area of this invention:

| U.S. Patent No. | PATENTEE |
|---|---|
| ,41,55 | Garrison |
| ,498, 301 | Self |
| 3,550,36 | Fischer et al |
| ,77,00 | Rowe |
| 3,047,494 | Browning |
| 3,19,580 | Stratton |
| 3,308,068 | Jones |
| 3,414,517 | Mosier et al |
| 3,575,855 | Estes |
| 3,76,485 | Chesser et al |
| 3,979,305 | Fischer et al |
| 4,040,866 | Mondshine |
| 4,063,603 | Rayborn |
| 4,064,056 | Walker et al |
| 4,140, 64 | Kistler et al |
| 4,17,800 | Walker |
| 4,1,794 | Grodde et al |
| 4,89,631 | Luxenburg |
| 4,409,108 | Carney et al |
| 4,45,41 | Swanson |
| 4,45,461 | Turner et al |
| 4,45,46 | Turner et al |
| 4,45,463 | Walker et al |
| 4,830,765 | Perricone et al |

US-A-5,007,489, issued April 16, 1991, and US-A-5,099,930 issued March 31, 1991, both to Enright et al, are both directed at overcoming the above described limitations of the prior art. Both of these patents disclose a method of lubricating well equipment and the prevention of balling of formation cuttings with the use of an additive comprising a non-water soluble polyglycol and an emulsifying surfactant.

While the additive of these patents is a remarkable improvement over the prior art, there is still a need in the art for improved well fluid additives.

Viewed from one aspect, the invention provides a method of increasing the lubricity of a well fluid, said method comprising contacting said fluid with a fatty acid or fatty acid derivative lubricating agent, with the proviso that where said agent does not comprise erucic acid or a derivative thereof said fluid is also contacted with an emulsifying agent.

Viewed from a further aspect, the invention provides a method of lubricating drilling equipment during drilling, completion or workover of a subterranean well, said method comprising contacting said equipment with a lubricating agent, characterised in that said agent comprises a fatty acid or derivative thereof, with the proviso that where said agent does not comprise erucic acid or a derivative thereof, said equipment is contacted with a composition comprising said lubricating agent and an emulsifying agent.

Viewed from a still further aspect, the invention provides a well fluid additive composition comprising a fatty acid or fatty acid derivative lubricating agent and an emulsifying agent, preferably an oil soluble emulsifying agent.

Viewed from a yet further aspect, the invention provides an aqueous well fluid composition characterised in that it comprises a fatty acid or fatty acid derivative lubricating agent and an emulsifying agent.

Viewed from a yet still further aspect, the invention provides the use of a lubricating fatty acid (such as erucic acid) or derivative thereof as a well fluid additive.

Thus the present invention provides a method of reducing the lubricity coefficient of a well fluid.

This may be achieved by contacting the drilling equipment with a lubricating amount of a fatty acid or fatty acid derivative lubricating agent, preferably erucic acid or a derivative thereof, and preferably also an emulsifying agent, e.g. a surfactant. This can conveniently be done by incorporating the lubricating agent and/or emulsifying agent into the well fluid, e.g. by the addition to the well fluid of an additive composition comprising these agents. The additive composition can optionally also include a non-water soluble alcohol and/or a hydrotrope. Preferably a non-water soluble alcohol will be included.

One preferred fatty acid for use according to the invention is erucic acid (Z-13-docosenoic acid) or a derivative thereof. This too is conveniently used together with an emulsifying agent.

Suitable erucic acid derivatives include high erucic acid rapeseed oil, oxidized high erucic acid rapeseed oil, sulfated high erucic acid rapeseed oil, sulfonated high erucic acid rapeseed oil, alkali metal erucates, alkaline earth erucates, transition metal erucates, glycerol and polyglycerol esters of erucic acid, sorbitol and sorbitan esters of erucic acid, erucic acid esters and diesters from polyethylene glycols, polyalkylene oxides and esters, erucic acid esters of water-insoluble and poorly water soluble alcohols, alkoxylated erucic acid, sulfurized high erucic acid rapeseed oil, phosphatized high erucic acid rapeseed oil, erucamides from alkanolamines, polyglycol amine and diamine erucamides, and mixtures thereof.

Besides erucic acid, other fatty acids may be used and the fatty acids or their derivatives will conveniently have a carbon chain length of 8 or more, e.g. in the range of about 8 to about 30 carbon atoms. Suitable fatty acids include octanoic, decanoic, dodecanoic, 9-dodecenoic(cis), tetradecanoic, 9-octadecenoic-12-hydroxy(cis), 9,12,15-octadecatrienoic (cis,cis,cis), 9,11,13-octadecatrienoic (cis,trans,trans), 9,11,13-octadecatrienoic-4-oxo(cis,trans,trans), octadecatetrenoic, eicosanoic, 11-eicosenoic(cis), eicosadienoic, eicosatrienoic, 5,8,11,14-eicosatetraenoic, eicosapentaenoic, docosanoic, 13-docosenoic(cis), docosatetraenoic, 4,8,12,15,19-docosapentaenoic, docosahexaenoic, tetracosenoic, 4,8,12,15,18,21-tetracosahexaenoic, mixtures thereof, and derivatives thereof (e.g. as described for erucic acid above).

Fatty acids suitable for use in the present invention may be derived from naturally occurring fats and oils, e.g. from such naturally occurring materials as butter, lard, tallow, grease, herring, menhaden, pilchard, sardine, castor, coconut, corn, cottonseed, jojoba, linseed, liticica, olive, palm, palm kernel, peanut, rapeseed, safflower, soya, sunflower, tall, tung, and mixtures and derivatives thereof.

In one embodiment of the present invention, the well fluid additive generally comprises a fatty acid or derivative thereof, and an emulsifying surfactant. Optionally, the well fluid additive may further include a non-water soluble component and/or a hydrotrope. The preferred well fluid additive of the present invention includes a fatty acid or derivative thereof, an emulsifying surfactant and a non-water soluble component In those instances where it is necessary to make the well fluid additive more compatible with the aqueous phase of the drilling fluid, the additive or the well drilling fluid of the present invention may further include a hydrotrope.

In a particular embodiment of the present invention the well fluid additive will comprise erucic acid or derivatives thereof.

As mentioned above, the fatty acids and derivatives thereof utilized in the present invention may be naturally occurring compounds, synthetic compounds, or derivatives thereof. The fatty acid or derivative thereof utilized in the present invention is generally selected to be compatible with the other components of the additive and the drilling fluid. It is also generally selected to provide a reduction in the balling of formation cuttings upon the surface of the drilling equipment and/or to impart lubricity to the drilling equipment.

Also as mentioned above, suitable fatty acids and derivatives thereof for use in the practice of the present invention include those having a carbon chain length of 8 or more. Generally, the fatty acids and derivatives thereof utilized in the present invention have a carbon chain length in the range of about 8 to about 30 carbon atoms. Preferably, the fatty acids and derivatives thereof utilized in the present invention have a carbon chain length in the range of about 14 to about 22 carbon atoms, and most preferably in the range of about 18 to about 22 carbon atoms. The carbon length is generally selected to provide proper compatibility with the other components of the well fluid additive and with the well fluid. The carbon length is also generally selected to provide a desired reduction in the balling of formation cuttings upon the surface of the drilling equipment and/or to impart lubricity to the drilling equipment.

The fatty acids suitable for use in the present invention may be derived from naturally occurring fats and oils including the following animal oils and fats: butter, lard, tallow, grease, herring, menhaden, pilchard and sardine; and including the following vegetable oils and fats: castor, coconut, corn, cottonseed, jojoba, linseed, liticica, olive, palm, palm kernel, peanut, rapeseed, safflower, soya, sunflower, tall and tung. Preferred naturally occurring sources for the fatty acids useful in the present invention include rapeseed, castor, cotton seed, palm kernel, sunflower and lard. Most preferred naturally occurring sources for the fatty acids useful in the present invention include rapeseed, castor and lard. The preferred rapeseed oil utilized in the present invention is a high erucic acid rapeseed oil.

Selection of which naturally occurring fatty acid to utilize will generally depend upon compatibility with the other components of the additive and well fluid. Selection also is dependent upon the desired reduction in the balling of formation cuttings upon the surface of the drilling equipment and on the desired lubricity.

Specific nonlimiting examples of fatty acids suitable for use in the present invention include octanoic, decanoic, dodecanoic, 9-dodecenoic(cis), tetradecanoic, 9-octadecenoic-12-hydroxy(cis), 9,12,15-octadecatrienoic (cis,cis,cis), 9,11,13-octadecatrienoic (cis,trans,trans), 9,11,13-octadecatrienoic-4-oxo (cis, trans,trans), octadecatetrenoic, eicosanoic, 11-eicosenoic(cis), eicosadienoic, eicosatrienoic, 5,8,11,14-eicosatetraenoic, eicosapentaenoic, docosanoic, 13-docosenoic(cis), docosatetraenoic, 4,8,12,15,19-docosapentaenoic, docosahexaenoic, tetracosenoic, 4,8,12,15,18,21-tetracosahexaenoic.

Derivatives of the above described fatty acids may also be utilized in the present invention. Such derivatives include alkali, alkaline earth, or transition metal substituted fatty acids; oxidized fatty acids; amides of fatty acids; salts of fatty acids; esters of fatty acids; sulfated fatty acids; sulfonated fatty acids; alkoxylated fatty acids; phosphatized fatty acids; and mixtures thereof. Preferably, the fatty acid derivatives utilized in the present invention are oxidized fatty acids, esters of fatty acids, sulfated fatty acids and sulphonated fatty acids. Most preferably, the fatty acid derivatives utilized in the present invention are oxidized fatty acids and esters of fatty acids.

Derivatives of erucic acid suitable for use in the present invention include high erucic acid rapeseed oil ("HEAR") ; oxidized HEAR oil; sulfated HEAR oil; sulfonated HEAR oil; alkali metal erucates, especially sodium erucate; alkaline earth erucates, especially calcium erucate; transition metal erucates, especially iron erucate; glycerol and polyglycerol esters of erucic acid (mono, di- and tri-); sorbitol and sorbitan esters of erucic acid (mono, di-, tri- and poly-); erucic acid esters and diesters from polyethylene glycols, polypropylene glycols and other polyalkylene oxides and/or esters; erucic acid esters of water-insoluble (or poorly water soluble) alcohols, especially 2-ethylhexyl alcohol; alkoxylated erucic acid, especially ethoxylated or propoxylated erucic acid; sulfurized HEAR oil; phosphatized HEAR oil; erucamide from alkanolamines such as diethanolamine; polyglycol amine and diamine erucamides; and mixtures thereof. Preferably, the erucic acid derivatives utilized in the present invention are oxidized erucic acids, esters of erucic acids, sulfated erucic acids and sulphonated erucic acids. Most preferably, the fatty acid derivatives utilized in the present invention are oxidized erucic acids and esters of erucic acids.

When the well fluid additive comprises erucic acid or derivatives thereof, the well fluid may comprise in the range of about 1 to about 100 volume percent erucic acid or derivatives thereof. Preferably, the well fluid additive will comprise in the range of about 5 to about 95 volume percent erucic acid or derivative thereof. More preferably, the well fluid additive will comprise in the range of about 10 to about 70 volume percent erucic acid or derivative thereof, and even more preferably in the range of about 10 to about 50 volume percent.

In the practice of the present invention when the well fluid comprises multicomponents, the well fluid additive will generally comprise in the range of about 1 to about 99 volume percent fatty acid or derivative thereof. Preferably, the well fluid additive will comprise in the range of about 5 to about 95 volume percent fatty acid or derivative thereof. More preferably, the well fluid additive will comprise in the range of about 10 to about 70 volume percent fatty acid or derivative thereof, and even more preferably in the range of about 10 to about 50 volume percent.

The non-water soluble component of the well fluid additive of the present invention is generally selected from among water-insoluble or poorly water soluble alcohols and derivatives thereof. Such water-insoluble or poorly water soluble alcohols include mono-, di-, tri- and poly-hydric alcohols. Non-limiting examples of classes of alcohols suitable for use in the present invention include glycols, glycerols, sorbitols, and derivatives thereof.

Polyglycols suitable for use as the non-water soluble component of the present invention generally have a molecular weight that will render the polyglycol sufficiently non-water soluble and of proper viscosity so as not to inhibit preparation and handling. Generally for most polypropyleneglycols, this means a molecular weight in the range of about 1000 to about 10,000. Accordingly, it is believed that for most polyglycols, a molecular weight below 1000 will have a tendency to be water soluble or at least not sufficiently non-water soluble for use in the present invention. At molecular weights above 10000, it is believed that difficulty in preparation and handling will be encountered. Of course, in those instances where a certain polyglycol may have a molecular weight outside of the above range and still be suitable, it may certainly be utilized.

The non-water soluble component of the present invention may be a di-hydroxy alcohol, such as a polyalkylene glycol, particularly polypropylene glycol. The non-water soluble component may also be a propoxylated tri-hydroxy alcohol such as a polyalkylene glycerol, particularly polypropylene glycerol. Ethylene oxide propylene oxide copolymers of di-hydroxy and trihydroxy alcohols may also be utilized as the non-water soluble component of the present invention.

In the practice of the present invention when a nonwater soluble component is utilized, the well fluid additive will generally comprise in the range of about 1 to about 99 volume percent non-water soluble component. Preferably, the well fluid additive will comprise in the range of about 5 to about 90 volume percent non-water soluble component. More preferably, the well fluid additive will comprise in the range of about 10 to about 80 volume percent, and most preferably in the range of about 30 to about 70 volume percent non-water soluble component.

The emulsifying surfactant used in the present invention concentrates itself at the surface of the droplets of the non-water soluble component forming an interfacial film around the droplet, thus lowering the interfacial tension between the droplet and water. Accordingly, the surfactant stabilizes the droplet, i.e. decreases its need to interact with the other droplets (coalesce) in an effort to lower its surface free energy. The surfactant in the interface also promotes the wetting and spreading of the droplet on the bit surface. In the interfacial film formation, the surfactant orients itself so that the organic "tail" extends into the body of the droplet and the cation associated with it is projected toward the water phase thus producing a droplet which appears to be positively charged when in contact with the negatively charged bit and shale surfaces.

The selected emulsifying agent is preferably oil soluble, preferably anionic and preferably has a hydrophilic/hydrophobic balance of about 4 or higher. Those skilled in the art will recognize that the hydrophilic/hydrophobic balance (HLB) may be calculated from the structural groupings, the formula required depending upon the compound. It is also recognized that HLB values obtained by such calculations are not absolute and often times differ from the HLB value found by experimental determination and that HLB values are only a rough guide to emulsification solutions and that HLB values may change when the environment in which they are placed changes, e.g. with a temperature increase.

Preferably, the emulsifying surfactant is oil soluble and is a sulfated petroleum natural acid, or a sulfonated natural or synthetic substituted or unsubstituted hydrocarbon compound. Suitable sulfonated hydrocarbon compounds include sulfonated alkyl aryl compounds such as sulfonated alkyl benzenes or sulfonated alkyl naphthalenes. Other anionic or nonionic surfactants may be selected such as sulfated soybean oil, long chain alcohols, and complex amines.

The selected emulsifying surfactant should not cause oil wetting of the weighing agent and solids in the aqueous system nor should the amount thereof produce a foam. When utilized in the well fluid additive of the present invention, the amount of the selected emulsifying surfactant normally will be in the range of about 1 to about 20 percent of the total volume of the composition used in the aqueous system. Preferably, the amount of the surfactant will be in the range of about 5 to about 15 and more preferably in the range of about 5 to about 10 percent of the total volume of the composition used in the aqueous system. It has been found that incorporation of the selected emulsifying surfactant for use in the present invention at this level will provide a comparatively tight emulsion, resulting in the formation of stable droplets of oil-like substance for adherence to the metallic surface of the drill bits and other drilling equipment.

The relative amounts of the components of the well fluid additive of the present invention are generally selected to provide compatibility with each other and with the well fluid, and to provide a reduction in the balling of formation cuttings upon the surface of the drilling equipment and/or to impart lubricity to the drilling equipment.

Alternatively, in the practice of the present invention, the well fluid additive may also include a hydrotrope, which is incorporated to make the surfactant and non-water soluble component more compatible with each other, and to make the additive more compatible with the aqueous phase of the well fluid.

In practising the present invention, any water soluble salt of a sulfonated xylene may be utilized as the selected hydrotrope. Preferably, sodium xylene sulfonate may be utilized, but other water soluble salts selected from the class consisting of water soluble salts of sulfonated xylene, cumene and toluene may be selected as the hydrotrope for use in the present invention.

The composition of the present invention when utilized in the method does not form a satisfactory emulsion without shearing. Such shearing may be created by application of surface mixing equipment used in drilling mud compounding when prepared in, for example, a mud pit at the well site. Alternatively, the composition may be placed into a circulated aqueous system introduced into the subterranean well and the shearing action of the fluids by the pumps and jet nozzles will form a stable "oil"-in-water emulsion of the composition in the aqueous system.

The small but stable droplets of the water-insoluble component will adhere to the drill bit or other metallic surface of the drilling equipment to provide a non-water wetting interface between such surface and the water-wet shale fragments in the aqueous system to prevent balling.

As the drilling fluid containing the aqueous system and the emulsified composition of the present invention is circulated within the subterranean well, it will come in contact with the surfaces of the drill bit. The emulsified droplets of the composition will adhere and spread over the bit surface causing it to be wet with the non-water soluble component, thus resulting in an interruption of the water-to-water bonding which occurs between the water-wet bit surface and the water-wet shale which in turn eliminates the tendency for bit balling. Such contact will also impart lubricity to the surface of such equipment, reducing for example problems of differential sticking, torque and the like.

As an alternative to preparation of the emulsion of the composition of the present invention as described above, such emulsion may be prepared in situ. For example, the non-water soluble component may be added to the aqueous system which has therein satisfactory emulsifying surfactants and which may or may not contain a hydrotrope. Thus, the in situ preparation of the emulsion is contemplated.

The well fluid additive of the present invention will generally constitute in the range of about 0.1 to about 25 volume percent of the final well fluid. Preferably, the well fluid additive will constitute in the range of about 0.2 to about 15 volume percent of the final well fluid, and more preferably in the range of about 0.5 to about 10 volume percent, and most preferably in the range of about 0.5 to about 5 volume percent of the final well fluid.

It is anticipated that the well fluid additive of the present invention will be commercially packaged in a 40 to 60 volume percent diluted form in a mixture of clay and water.

The present invention is intended to be utilized with aqueous drilling fluids. In such aqueous systems the base fluid is water. It is well known to those of skill in the art that the source for the base fluid water is generally not important. In fact, water for such a system may be fresh water, well water, sea water, brine, or combinations thereof.

It is understood that in the practice of the present invention, the aqueous system may include any of the additives and components known to those of skill in the art, such as bentonite, barite, gums, water soluble polymers, viscosity modifying agents, breakers, emulsifiers, thinners, circulation control additives and the like.

The invention will now be described in further detail with reference to the following non-limiting Examples:

A drilling fluid in which the additive composition of the present invention has been emulsified has been found to have excellent lubricity characteristics. For the purposes of determining lubricity, we have utilized in our testing the "Procedure for Determination of Lubricity Coefficient" (Tentative), a standardized testing procedure published by the American Petroleum Institute (1980), as follows:

1. Calibration of Instrument
   a. Prepare a calibration curve for conversion of ammeter reading to lubricity coefficient by using a Prony brake and procedure provided with the instrument.
   b. Recalibrate if the drive motor is altered or replaced.
2. Standardization of Test Ring and Block
   a. Wash the test ring and block with water and a household cleanser. Rinse thoroughly with water.
   b. Place the test ring on the tapered shoulder at the bottom of the shaft and secure with the lock nut.
   c. Place the test block in the holder, concave side face out, and align with the test ring.
   d. Fill the sample container with water (approximately 300cm$^3$) and position it so that the test surfaces are covered.
   e. Attach a rheostat in series with the instrument and turn on the drive motor. Adjust the rheostat until the tachometer on the drive shaft reads 60 rpm.
   f. Apply 150in.-load (3.81m-load) with the torque arm. Maintain speed at 60 rpm.
   g. Observe meter reading in amperes and refer to the calibration chart for the lubricity coefficient. Run for several minutes or until the reading stabilizes. The lubricity coefficient for water should be between 0.33 and 0.36. If it is not in this range, the ring and block surfaces should be reconditioned using one of the following methods:
      (1) Continue to operate the instrument at a constant load of 150 in.-lb (172.8m-kg) with water in contact with the test surfaces. The ammeter reading should slowly approach the test range of 33 to 36 and then remain steady.
      (2) Operate the instrument using a slurry of about 25 lb per bbl (0.098 kg/L) of bentonite in fresh water and a load of 150 in.-lb (172.8m-kg). Repeat step (1).
      (3) Place a grinding compound on the contact surfaces and operate the instrument at a load of 150 in.-lb (172.8m-kg). Repeat step (1).
3. Determination of Mud Lubricity Coefficient
   a. Assemble the instrument and standardise the test ring and block to give a 0.33 to 0.36 lubricity coefficient for water.

b. Stir the mud sample ten minutes on a Multimixer prior to testing.

c. Place the mud sample in the container and position to cover the ring and block.

d. Start the motor and adjust the rheostat to give 60 rpm with a load of 150 in.-lb (172.8m-kg).

e. Operate the instrument until the ammeter reading stabilizes.

f. Use the calibration curve to convert the ammeter reading to lubricity coefficient.

In the working Examples the following commercial products were used:

| | |
|---|---|
| Mil-Gel | a bentonite clay based product |
| New Drill HP | partially hydrolyzed polyacrylamide with KCl (30:70 wt ratio) |
| Mil-Pac LV | polyanionic cellulose |
| Mil-Bar | barium sulphate |
| New Thin | sodium polyacrylate |
| Rev Dust | calcium bentonite dust (small particles) |
| Bio-Drill | polyglycol based anti-bit balling agent |
| Mil-Lube | extreme pressure lubricant - cotton seed oil, sulphurized lard oil and sodium sulphonate (1:1:1 wt ratio) |
| XC-Polymer | xanthan gum |
| Uni-Cal | chrome lignosulphonate |
| Ligco | lignite |
| Mil-Pac R | polyanionic cellulose |
| White oil | paraffin oil |

The units ppb are pounds per gallon equivalent, ie scaled down from a 42 gallon barrel to a 350ml laboratory barrel.

## EXAMPLE I

Using the procedure outlined above, several compositions in accordance with the present invention were prepared using NEOPOL 13, a high erucic acid rapeseed oil ("HEAR") composed of about 45 to 50 percent $C_{22}$ fatty acids. Three polypropylene glycerols from Baker Performance Chemicals were utilized: (1) A-3460 (4000 MW); (2) MD-2756 (6000 MW); and (3) MD-3000 (3000 MW). Petroleum sulfonates H-50, available from Penreco, and SS 460-60, available from MDM Chemicals. These components were tested separately or in combination, with the results presented in Table I below.

TABLE I

**Base Mud - 10 ppg(1.20 kg/L) New-Drill HP**

0.90 bbl (0.315 L) Tap water

10 ppb(12.96kg/L) Mil-Gel

1 ppb(1.30kg/L) New-Drill HP

1 ppb(1.30kg/L) Mil-Pac LV

80 ppb(103.68kg/L) Mil-Bar

0.2 cc New-Thin

(3 vol% Lubricant)

AFTER HOTROLLING 16 HOURS AT 150°F (65.6°C)

| No. | Experimental Lubricants | Sheen | Foam | Thickening | Lubricity Coefficient |
|---|---|---|---|---|---|
| 1 | 90:10 A-3480/H-50 | Y | N | N | .12 |
| 2 | 90:10 MD-2756/H-50 | N | N | N | .15 |
| 3 | 90:10 MD-3000/H-50 | N | N | N | .097 |
| 4 | 100% NEOPOL 13 | Y | Y | Y | *.23 |
| 5 | 50:40:10 NEOPOL/3480/H-50 | N | N | N | .01 |
| 6 | 50:40:10 NEOPOL/StepanC-68/ H-50 | Y | Y | N | *.14 |
| 7 | 50:40:10 NEOPOL/White Oil/ H-50 | N | Y | N | **.17 |
| 8 | 50:50 NEOPOL/3480 | Y | N | N | .08 |
| 9 | 50:50 NEOPOL/Stephan C-68 | | Y | Y | - |
| 10 | 50:50 NEOPOL/White Oil | ? | Y | Y | - |
| 11 | 50:50 NEOPOL/A-3480 | Y | N | N | .06 |
| 12 | 50:50 NEOPOL/MD-2756 | Y | N | N | .04 |
| 13 | 50:50 NEOPOL/MD-3000 | Y | N | N | .02 |
| 14 | 90:10 NEOPOL/H-50 | Y | Y | N | .07 |
| 15 | 50:40:10 NEOPOL 13/A-3480/H-50 | N | N | N | .03 |
| 16 | 50:40:10 NEOPOL 13/MD-3756/H-50 | N | N | N | .01 |

| 17 | 50:40:10 NEOPOL 13/MD-3000/H-50 | N | N | N | .01 |
|----|----------------------------------|---|---|---|-----|
|    | **Commercial Lubricant**        |   |   |   |     |
| 18 | 100% Bio-Drill                   | N | N | N | .07 |
| 19 | 100% Mil Lube                    | N | Y | N | .02 |
| 20 | Base Mud w/o Lubricant           | N | N | N | .27 |

\*   Foamed Severely

\*\*  Foamed Slightly

?   Did not measure, fluid too viscous


EXAMPLE II

The data from Table I indicate that various results for "sheen", "foam", "thickening" and "lubricity coefficient" can be obtained depending upon the components selected and their relative ratios. In Table II below, a medium density (12ppg = 1.44 kg/L) freshwater fluid was tested with lubricant No. 16 from Table I, at various component ratios as shown.

TABLE II

Base Mud - 12 ppg(1.44 kg/L) New-Drill HP

0.86 bbl (0.301 L) Tap water

10 ppb(12.96kg/L) Mil-Gel

1 ppb(1.30kg/L) New-Drill HP

1 ppb(1.30kg/L) Mil-Pac LV

18 ppb(23.33kg/L) Rev-Dust

200 ppb(259.2kg/L) Mil-Bar

0.15 ml New-Thin

(3% Vol - Lubricant)

Lubricity Properties

| No. | Fluid | Sheen | Foam | Thickening | Lubricity Co-Efficient |
|-----|-------|-------|------|------------|------------------------|
| 1 | Base Mud | N | N | N | .20 |
| 2 | Base Mud 3% 100/0/0* | Y | Y | Y | .12 |
| 3 | Base Mud 3% 95/5/0* | Y | Y | Y | .11 |
| 4 | Base Mud 3% 95/0/5* | Y | Y | N | .07 |
| 5 | Base Mud 3% 0/95/5* | Y | N | N | .07 |
| 6 | Base Mud 3% 50/50/0* | Y | N | N | .12 |
| 7 | Base Mud 3% 80/10/10* | Y | N | N | .02 |
| 8 | Base Mud 3% 10/80/10* | N | N | N | 0.015 |
| 9 | Base Mud 3% Bio-Drill | N | N | N | 0.10 |
| 10 | Base Mud 3% Mil-Lube | N | N | N | 0.04 |

* (Vol) Ratios of NEOPOL 13/MD-2756/SS460-60

## EXAMPLE III

Environmental toxicity tests were run on various lubricants of the present invention as well as a commercial lubricant, as shown in Table III below. In the following Examples, Experimental Lubricant A is a 50:40:10 volume ratio of Neopol 13:A-3480:H-50 (SS 460-60); Experimental Lubricant B is a 50:40:10 volume ratio of Neopol 13:MD-2756:H-50 (SS 460-60), and Experimental Lubricant C is a 50:40:10 volume ratio of Neopol 13: MD3000:H-50 (SS 460-60).

## TABLE III

## Environmental Testing

## in Generic Mud No. 7

## Rangefinders

| Product | Range, ppm SPP |
|---|---|
| 1. 3% Commercial Product | 30,000 - 100,000 |
| 2. 3% Commercial Product + 10% Emulsifier | 10,000 - 30,000 |
| 3. Lubricant A, 3% Neopol 13/A-3480/H-50 | 500,000 |
| 4. Lubricant B, 3% Neopol 13/MD-2756/H-50 | >500,000 |
| 5. Lubricant C, 3% Neopol 13/MD-3000/H-50 | 100,000 - 250,000 |

SPP = suspended particulate matter

## US MYSID TEST

| Product | LC 50, ppm SPP |
|---|---|
| 3% Lubricant B | 500,000 |

LC 50 = concentration at which 50% of shrimp are killed

## UK MYSID TEST

| Product | LC 50, mg/L |
|---|---|
| Neopol 13 | 1,000 |

## EXAMPLE IV

The stability of emulsions formed with Experimental Lubricants A, B and C were measured by emulsifying 3 volume percent of the lubricant in tap water and allowing the suspension to remain static for 64 hours at 120°F (48.9°C). After 64 hours, the emulsion was stable with minimal separation. How emulsion stability affects the lubricative characteristics of Experimental Lubricants A, B and C was evaluated in freshwater and sea water, 12 ppg (1.44kg/L) New-Drill fluids, with the results presented in Table IV below.

12

TABLE IV

## Seawater - 9 ppg (1.08kg/L) New-Drill HP

0.98 bbl (0.343 L) Tap water

10.7 ppb(13.87kg/L) Sea Salt

10 ppb(12.96kg/L) Mil-Gel

0.5 ppb(0.65kg/L) New-Drill HP

0.25 ppb(0.32kg/L) Mil-Pac LV

1% ppb(1.30kg/L) Rev-Dust

(1% Vol Lubricant)

0.6 ppb Caustic

9.5 pH

**Lubricity Properties**

| No. | Fluid | Sheen | Foam | Lubricity Coefficient |
|-----|-------|-------|------|-----------------------|
| 1 | 9 ppg(1.08kg/L) Seawater | N | Slight | 0.31 |
| 2 | 9 ppg(1.08kg/L) Seawater w/2% Commercial Product*** | Y | Y | 0.19 |
| 3 | 9 ppg(1.08kg/L) Seawater w/2% Commercial Product + 10% Emulsifier | Y | Y | 0.17 |
| 4 | 9 ppg(1.08kg/L) Seawater w/2% Lubricant B | Y | N | 0.13 |
| 5 | 9 ppg(1.08kg/L) Seawater/ Lubricant/B @ 0.25% | N | N | 0.25 |
| 6 | 9 ppg(1.08kg/L) Seawater/ Lubricant/B @ 0.5%* | N | N | 0.20 |
| 7 | 9 ppg(1.08kg/L) Seawater/ Lubricant/B @ 0.75%* | N | N | 0.18 |
| 8 | 9 ppg(1.08kg/L) Seawater/ Lubricant/B @ 1%* | N | N | 0.16 |

* After applying load (torque of 150in-pound (172.8 m-kg)) the initial coefficient of friction (dimensionless) is low <0.08>, then increases w/time that load is applied. Torque was applied on a Modified Baroid tester at 60rpm. Film may possibly be removed with time.
*** The commercial product is a lubricating agent which is a vegetable oil in water at a 1:4 weight ratio.

**TABLE IV (Cont.)**

<u>Base Mud - 12 ppg(1.44kg/L) New-Drill HP</u>
.865 bbl (0.303 L) Water
10 ppb(12.96kg/L) Mil-Gel
1 ppb(1.30kg/L) New-Drill HP
1 ppb(1.30kg/L) Mil-Pac LV
200 ppb(259.2kg/L) Mil-Bar
(3% Lubricant)

**Lubricity Properties After Hotrolling 16 hours at 150°F (65.6°C)**

| No. | Sample | Lubricant Composition | Lubricity Coefficient |
|-----|--------|----------------------|----------------------|
| 1 | A in Freshwater | A: 50:40:10 Neopol 13/A3480/SS460-60 | .01 |
| 2 | B in Freshwater | B: 50:40:10 Neopol 13/MD-2756/SS460-60 | .02 |
| 3 | C in Freshwater | C: 50:40:10 Neopol 13/MD-3000/SS-460-60 | .02 |
| 4 | A in Seawater* | A: 50:40:10 Neopol 13/A3480/SS460-60 | .10 |
| 5 | B in Seawater* | B: 50:40:10 Neopol 13/MD-2756/SS460-60 | .11 |
| 6 | C in Seawater* | C: 50:40:10 Neopol 13/MD-3000/SS460-60 | .14 |

* Seawater muds flocculated after adding lubricants. Added 1 ppb(1.30kg/L) Lignosulfonate and 0.4 ppb(0.52kg/L) Caustic Soda to deflocculate fluids before hotrolling.

## EXAMPLE V

Using unweighted and 12 ppg (1.44kg/L) New Drill HP fluids, Experimental Lubricant B was added to these fluids to determine the concentration necessary to reduce the lubricity coefficient to less than 0.1. Results are shown in Table V.

## TABLE V

### Unweighted New-Drill HP

.98 bbl (0.343 L) Water

10 ppb(12.96kg/L) Mil-Gel

0.5 ppb(0.65kg/L) New-Drill HP

0.25 ppb(0.32kg/L) Mil-Pac LV

1%wt (relative to water) Rev-Dust

(Lubricant)

### Lubricity Data

| No. | Fluid | Lubricity Coefficient |
|-----|-------|----------------------|
| 1 | Base | .19 |
| 2 | Base w/ 0.5 Vol% B* | .01 |
| 3 | Base w/ 0.25 Vol% B* | .03 |
| 4 | Base w/ 0.125 Vol% B* | .12 |

\* 50/40/10 NEOPOL/2756/H-50

### Initial Lubricity Properties

| No. | Fluid | Foam | Lubricity Coefficient |
|-----|-------|------|----------------------|
| 1 | 0.25% Lubricant B | N | 0.02 |
| 2 | 0.25% Commercial Product | Heavy* | 0.12 |
| 3 | 0.25% #2w/10% Emulsifier | Heavy* | 0.11 |
| 4 | 0.75% Commercial Product | Heavy* | 0.09 |
| 5 | 1.25% Commercial Product | Heavy* | 0.11 |
| 6 | 2% Commercial Product | Heavy* | 0.06 |
| 7 | 0.25% #1 cut 50% w/water | N | 0.14 |
| 8 | 1.25% #5 w/Emulsifier | Heavy* | 0.07 |
| 9 | 0.375% #1 cut 50% w/water | N | 0.03 |

\* Very Thick Body Foam

TABLE V (Cont.)

Unweighted New-Drill HP        Base Mud - 12 ppg (1.44kg/L)

```
.98 bbl (0.343L) Water          0.86 (0.301 L) Tap Water
10 ppb(12.96kg/L) Mil-Gel        10 ppb(12.96kg/L) Mil-Gel
0.5 ppb(0.65kg/L) New-Drill HP   1 ppb(1.30kg/L) New-Drill HP
0.25 ppb(0.32kg/L) Mil-Pac LV    1 ppb(1.30kg/L) Mil-Pac LV
1% Rev-Dust                      18 ppb(23.33kg/L) Rev Dust
(0.25% Lubricant)                0.15 ppb(0.19kg/L) New-Thin
                                 200 ppb(259.2kg/L) Mil-Bar
                                 (1.0% Lubricant)
```

**Lubricity Properties After Hotrolling 16 Hours at 150°F (65.6°C)**

| No. | Fluid | Foam | Lubricity Coefficient |
|---|---|---|---|
| 1 | Unweighted Fresh Base | N | 0.26 |
| 2 | Unweighted Fresh Base/Commercial Product | N | 0.21 |
| 3 | Unweighted Fresh Base/Mil Lube | Y | 0.15 |
| 4 | Unweighted Fresh Base/Commercial Product | Y | 0.15 |
| 5 | Unweighted Fresh Base/Lubricant B | N | 0.03 |
| 6 | 12 ppg(1.44kg/L) Fresh Base | N | 0.19 |
| 7 | 12 ppg(1.44kg/L) Fresh Base/Commercial Product | Y | 0.22 |
| 8 | 12 ppg(1.44kg/L) Fresh Base/Mil-Lube | Y | 0.14 |
| 9 | 12 ppg(1.44kg/L) Fresh Base/Commercial Product | Y | 0.13 |
| 10 | 12 ppg(1.44kg/L) Fresh Base/Lubricant B | N | 0.07 |

EXAMPLE VI

The effectiveness of the product in the absence of hardness, as well as the occurrence of flocculation, were evaluated in unweighted and 12 ppg(1.44kg/L) New-Drill HP fluids at 3, 6 and 30 volume percent sodium chloride and 10% KCl. In the KCl fluid, Mil-Gel and XC Polymer were substituted for one another to determine if the lubricant magnified the flocculation of bentonite in non-dispersed salt muds. Also, Experimental Lubricant C, which is about half the molecular weight of Experimental Lubricant B, was evaluated to determine if molecular weight was a function of the degree of flocculation. The results are shown in Table VI below.

## TABLE VI

9 ppg(1.08kg/L) NaCl       12 ppg(1.44kg/L) NaCl

0.96 bbl (0.336 L) Tap Water     0.86 bbl (0.301 L) Tap Water
10 ppb(12.96kg/L) Mil-Gel       10 ppb(12.96kg/L) Mil-Gel
0.5 ppb(0.65kg/L) New-Drill HP   1 ppb(1.30kg/L) New-Drill HP
0.25 ppb(0.32kg/L) Mil-Pac LV    1 ppb(1.30kg/L) Mil-Pac LV
9 ppb(11.66kg/L) Rev-Dust       18 ppb(23.33kg/L) Rev Dust
10.5 ppb(13.61kg/L) NaCl        9.2 ppb(11.92kg/L) NaCl
(Lubricant)                      200 ppb(259.2kg/L) Mil-Bar
                              0.5 ppb(0.65kg/L) NaOH
                              (Lubricant)

### Initial Rheological Properties

| No | Fluid | 600 | 300 | 200 | 100 | 6 | 3 | PV | YP | Gels |
|----|-------|-----|-----|-----|-----|---|---|----|----|------|
| 1 | 9 ppg(1.08kg/L) NaCl Base | 17 | 12 | 10 | 7 | 5 | 4 | 5 | 8 | 5/12 |
| 2 | #1 + 0.25% Lube B | 45 | 37 | 36 | 35 | 18 | 15 | 8 | 29 | 20/25 |
| 3 | #1 + 0.5% Lube B | 78 | 72 | 72 | 72 | 38 | 32 | 6 | 66 | 25/25 |
| 4 | #3 + 1 ppb Uni-Cal/0/25 NaOH | 60 | 60 | 60 | 62 | 52 | 33 | - | - | 35/40 |
| 5 | #1 + 0.5% Commercial Product | 16 | 11 | 9 | 7 | 2 | 1 | 5 | 6 | 4/10 |
| 6 | #1 + 0.5% Commercial Product w/10% Emulsifier | 14 | 8 | 6 | 4 | 1 | 1 | 6 | 2 | 1/3 |

600, 300, etc are the rpm dial settings on the Fan 35 Rheometer, based on Bingham plastic model. PV is plastic viscosity in centipoise, YP is yield point in lbs/100ft$^2$, and Gels is the gel strength (lbs/100ft$^2$)at 3rpm after 10sec and 10 min.

Initial Rheological Properties

| No | Fluid | 600 | 300 | 200 | 100 | 6 | 3 | PV | YP | Gels | Lub. Coeff |
|----|-------|-----|-----|-----|-----|---|---|----|----|------|------------|
| 1 | 9 ppg(1.08kg/L) NaCl Base | 16 | 11 | 9 | 7 | 4 | 2 | 5 | 6 | 3 | .24 |
| 3 | #1 + 0.5% Lubricant B | 40 | 37 | 36 | 36 | 34 | 24 | 3 | 34 | 33/36 | .06 |
| 4 | #3 + 1 ppb Commercial Product/ 0.25% NaOH | 28 | 24 | 23 | 22 | 20 | 20 | 4 | 20 | 20/23 | .18 |
| 5 | #1 + 0.5% Commercial Product | 11 | 7 | 6 | 4 | 2 | 1 | 4 | 3 | 1/3 | .22 |
| 7 | 12 ppg(1.44kg/L) NaCl | 36 | 22 | 16 | 10 | 25 | 1 | 14 | 8 | 2 | .20 |
| 8 | #7 + 2% Lubricant B | 88 | 66 | 63 | 58 | 40 | 40 | 22 | 44 | 40/45 | .11 |
| 9 | #7 + 2% Commercial Product | 47 | 29 | 22 | 15 | 3 | 2 | 18 | 11 | 2 | .11 |
| 10 | #9 w/10% Emulsifier | 51 | 33 | 25 | 17 | 5 | 4 | 18 | 15 | 4 | .17 |

## TABLE VI (Cont.)
### 12 ppg(1.44kg/L) - 10% KCl

0.86 bbl (0.301 L) Tap Water
10% KCl
(10 ppb(12.96kg/L) Mil-Gel)
1 ppb(1.30kg/L) XC Polymer
1 ppb(1.30kg/L) New-Drill HP
1.5 ppb(1.94kg/L) Mil-Pac LV
200 ppb(259.2kg/L) Mil-Bar
(Lubricant)

### Properties After Hotrolling 16 Hours at 150°F (65.6°C)

| No | Fluid | 600 | 300 | 200 | 100 | 6 | 3 | PV | YP | Gels | Lub. Coeff. |
|---|---|---|---|---|---|---|---|---|---|---|---|
| 1 | 12 ppg(1.44kg/L) w/Gel | 48 | 29 | 22 | 15 | 3 | 2 | 19 | 10 | 4 | .3 |
| 2 | + 1% Lubricant B | 55 | 38 | 31 | 24 | 12 | 10 | 17 | 21 | 10 | 0.23 |
| 3 | + 2% Lubricant B | 78 | 60 | 48 | 42 | 38 | 40 | 18 | 42 | 40 | 0.20 |
| 4 | + 2% Lubricant C | 78 | 63 | 56 | 48 | 42 | 46 | 15 | 48 | 40 | 0.21 |
| 5 | 12 ppg(1.44kg/L) 2/XC Polymer | 67 | 43 | 33 | 22 | 7 | 4 | 24 | 19 | 4 | 0.22 |
| 6 | + 3% Lubricant B | 73 | 49 | 40 | 28 | 8 | 6 | 24 | 25 | 7 | 0.12 |

EP 0 652 271 A1

9 ppg(1.08kg/L) - 6% NaCl

0.96 bbl (0.336 L) Tap Water
10 ppb(12.96kg/L) Mil-Gel
1 ppb(1.30kg/L) New-Drill HP
1 ppb(1.30kg/L) Mil-Pac LV
9 ppb(11.66kg/L) Rev-Dust
22 ppb(28.51kg/L) NaCl
(0.5% Lubricant)

9 ppg(1.08kg/L) - 20% NaCl

0.90 bbl (0.315 L) Tap Water
10 ppb(12.96kg/L) Mil-Gel
1 ppb(1.30kg/L) New-Drill HP
1 ppb(1.30kg/L) Mil-Pac LV
9 ppb(11.66kg/L) Rev-Dust
80 ppb(103.68kg/L) NaCl
(0.5% Lubricant)

**Properties After Hotrolling 16 Hours at 250°F (121.1°C)**

| No | Fluid | 600 | 300 | 200 | 100 | 6 | 3 | PV | YP | Gels | Lub. Coeff. |
|----|-------|-----|-----|-----|-----|---|---|----|----|------|------|
| 1 | 9 ppg(1.08kg/L) w/6% NaCl | 29 | 23 | 21 | 19 | 12 | 1C | 6 | 17 | 10 | .23 |
| 2 | + Lubricant B | 82 | 80 | 81 | 81 | 31 | 30 | 2 | 78 | 28 | .03 |
| 3 | 9 ppg(1.08kg/L) w/20% NaCl | 50 | 40 | 32 | 32 | 21 | 20 | 10 | 30 | 20 | .2 |
| 4 | + Lubricant B* | 45 | 35 | 26 | 26 | 18 | 17 | 10 | 25 | 17 | .2 |

## TABLE VI (Cont.)

| No. | Fluid | Lubricity Coefficient |
|-----|-------|-----------------------|
| 1 | Unweighted NaCl Base | 0.26 |
| 2 | Unweighted NaCl Base/Commercial Product* | 0.15 |
| 3 | Unweighted NaCl Base/Commercial Product* | 0.15 |
| 4 | Unweighted NaCl Base/Commercial Product* | 0.16 |
| 5 | Unweighted NaCl Base/Lubricant B* | 0.06 |

* 0.25% (Vol) Lubricants

### EXAMPLE VII

Experimental lubricant B was evaluated alongside commercial lubricants at a density of 15 ppg(1.80kg/L) in a lignosulfonate fluid. Additionally, lubricant B was evaluated with Mil-Lube in a 12 ppg(1.44kg/L) New-Drill fluid after hotrolling 16 hours at 250°F (121.1°C). Results are shown in Table VII below.

### TABLE VII

**15 ppg(1.80kg/L) Uni-Cal**

.71 bbl (0.249 L) Tap Water

10 ppb(12.96kg/L) Mil-Gel

3 ppb(3.89kg/L) Uni-Cal

1 ppb(1.30kg/L) Ligco

0.75 ppb(0.97kg/L) NaOH

0.5 ppb(0.65kg/L) Mil-Pac R

358 ppb(463.97kg/L) Mil-Bar

(3% lubricant)

Lubricity Properties After Hotrolling 16 Hours at 150°F (65.6°C)

| No. | Fluid | Sheen | Foam | Lubricity Coefficient |
|-----|-------|-------|------|-----------------------|
| 1 | Base | N | N | .28 |
| 2 | Lubricant B | N | N | .21 |
| 3 | 650 M.S. Glycol | Y | N | .27 |
| 4 | Mil-Lube | Y | Y | .06 |
| 5 | Commercial Product | N | N | .27 |
| 6 | Commercial Product | Y | Y | .07 |
| 7 | Commercial Product | Y | Y | .06 |
| 8 | Commercial Product | Y | Y | .07 |
| 9 | Commercial Product | Y | Y | .28 |
| 10 | Bio-Drill | N | N | .31 |

## 12 ppg(1.44kg/L) Base

.86 bbl (0.301 L) Tap Water
10 ppb(12.96kg/L) Mil-Gel
18 ppb(23.33kg/L) Rev-Dust
1 ppb(1.30kg/L) New-Drill HP
200 ppb(259.2kg/L) Mil-Bar
(1% Lubricant)

Properties After Hotrolling 16 Hours at 250°F (121.1°C)

| No. | Fluid | 600 | 300 | 200 | 100 | 6 | 3 | PV | YP | Gels | Lub. Coeff. |
|-----|-------|-----|-----|-----|-----|---|---|----|----|------|-------------|
| 1 | 12 ppb(1.44kg/L) Base | 42 | 23 | 15 | 9 | 2 | 1 | 19 | 4 | 2 | .21 |
| 2 | 12 ppb(1.44kg/L) Base/Lubricant B | 44 | 24 | 16 | 9 | 2 | 1 | 20 | 4 | 2 | .03 |
| 3 | 12 ppb(1.44kg/L) Base/Mil-Lube | 44 | 26 | 18 | 10 | 3 | 2 | 18 | 8 | 2 | .07 |

EP 0 652 271 A1

EP 0 652 271 A1

EXAMPLE VIII

This experiment compares the lubricity of erucic acid derivatives. As Table VIIIB shows, erucic acid derivatives reduce the lubricity coefficient as compared to deionized water.

## TABLE VIIIA

| LUBRICITY OF ERUCIC ACID DERIVATIVES | |
|---|---|
| SAMPLE | LUBRICITY COEFFICIENT |
| Deionized (DI) Water | 0.42 |
| 1.0 wt. % SRO[1] in DI Water | 0.14 |
| 1.0 wt. % SRO[1] in 10 wt.% Potassium Chloride in DI Water | 0.18 |
| 0.5 wt.% NEAPOL 13[2] in DI Water + 1 drop 50% Caustic Soda | 0.14 |
| Unweighted NEW-DRILL (Drilling Fluid)[3] | >0.50 |
| Unweighted NEW-DRILL[3] + 0.5 wt.% NEAPOL 13 | 0.11 |
| 1. Oxidized HEAR oil from Reilly-Whiteman Inc. 2. Sulfated HEAR oil from Reilly-Whiteman Inc. 3. See Table VIIIB | |

## TABLE VIIIB

| NEW DRILL System (Unweighted) | |
|---|---|
| PRODUCT | CONCENTRATION, g/350 ml |
| DI Water | 340 |
| MILGEL | 7.5 |
| NEW-DRILL PLUS | 0.5 |
| 50% Caustic Soda | 0.05 |
| 1. Pre-hydrate MILGEL in DI Water and as slurry is mixing, add components in order listed. | |

The description given herein is intended to illustrate the preferred embodiments of the present invention. It is possible for one of ordinary skill in the art to make various changes to the details of the present invention, without departing from the spirit of this invention. Therefore, it is intended that all such variations be included within the scope of the present invention as claimed.

24

## Claims

1. A method of increasing the lubricity of a well fluid, said method comprising contacting said fluid with a fatty acid or fatty acid derivative lubricating agent, with the proviso that where said lubricating agent does not comprise erucic acid or a derivative thereof said fluid is also contacted with an emulsifying agent.

2. A method as claimed in Claim 1 wherein said fluid is also contacted with a non-water soluble alcohol.

3. A method as claimed in either of Claims 1 and 2 wherein said fluid is also contacted with a hydrotrope.

4. A method of lubricating drilling equipment during drilling, completion or workover of a subterranean well, said method comprising contacting said equipment with a lubricating agent, characterised in that said agent comprises a fatty acid or fatty acid derivative, with the proviso that where said lubricating agent does not comprise erucic acid or a derivative thereof said equipment is contacted with a composition comprising said lubricating agent and an emulsifying agent.

5. A method as claimed in Claim 4 wherein said equipment is contacted with a lubricant composition comprising said lubricating agent and a non-water soluble alcohol.

6. A method as claimed in either of Claims 4 and 5 wherein said equipment is contacted with a lubricant composition comprising said lubricating agent and a hydrotrope.

7. A method as claimed in either of Claims 3 and 6 wherein said hydrotrope comprises a water-soluble sulfonated xylene salt.

8. A method as claimed in any one of Claims 1 to 7 wherein said lubricating agent comprises erucic acid or a derivative thereof.

9. A method as claimed in Claim 8 wherein said lubricating agent comprises at least one of the following: erucic acid, high erucic acid rapeseed oil, oxidized high erucic acid rapeseed oil, sulfated high erucic acid rapeseed oil, sulfonated high erucic acid rapeseed oil, alkali metal erucates, alkaline earth erucates, transition metal erucates, glycerol and polyglycerol esters of erucic acid, sorbitol and sorbitan esters of erucic acid, erucic acid esters and diesters from polyethylene glycols, polyalkylene oxides and esters, erucic acid esters of water-insoluble and poorly water soluble alcohols, alkoxylated erucic acid, sulfurized high erucic acid rapeseed oil, phosphatized high erucic acid rapeseed oil, erucamide from alkanolamides, and polyglycol amine and diamine erucamides.

10. A method as claimed in Claim 9 wherein said lubricating agent is selected from the group of lubricating agents consisting of oxidized erucic acids, esters of erucic acids, sulfated erucic acids and sulphonated erucic acids.

11. A method as claimed in Claim 9 wherein said lubricating agent is selected from the group of lubricating agents consisting of oxidized erucic acids and esters of erucic acids.

12. A method as claimed in any one of Claims 1 to 9 wherein said fatty acid or derivative thereof is selected from octanoic, decanoic, dodecanoic, 9-dodecenoic(cis), tetradecanoic, 9-octadecenoic-12-hydroxy(cis), 9,12,15-octadecatrienoic(cis,cis,cis), 9,11,13-octadecatrienoic(cis,trans,trans), 9,11,13-octadecatrienoic-4-oxo(cis,trans,trans), octadecatetraenoic, eicosanoic, 11-eicosenoic(cis), eicosadienoic, eicosatrienoic, 5,8,11,14-eicosatetraenoic, eicosapentaenoic, docosanoic, 13-docosenoic(cis) docosatetraenoic, 4,8,12,15,19 docosapentaenoic, docosahexaenoic, tetracosenoic, 4,8,12,15,18,21-tetracosahexaenoic acids, mixtures thereof, and derivatives thereof.

13. A well fluid additive composition comprising a fatty acid or derivative thereof and an emulsifying agent.

14. An aqueous well fluid composition characterised in that it comprises a fatty acid or derivative thereof and an emulsifying agent.

15. A composition as claimed in either of Claims 13 and 14 wherein said emulsifying agent is selected from the group consisting of sulfonated petroleum natural acid, sulfated soybean oil, long chain alcohols and complex amines.

16. A composition as claimed in any one of Claims 13 to 15 wherein said fatty acid or derivative thereof is selected from the group consisting of octanoic, decanoic, dodecanoic, 9-dodecenoic(cis), tetradecanoic, 9-octadecenoic-12-hydroxy(cis), 9,12,15-octadecatrienoic(cis,cis,cis), 9,11,13-octadecatrienoic(cis,trans, trans), 9,11,13-octadecatrienoic-4-oxo(cis,trans,trans), octadecatetraenoic, eicosanoic, 11-eicosenoic(cis), eicosadienoic, eicosatrienoic, 5,8,11,14-eicosatetraenoic, eicosapentaenoic, docosanoic, 13-docosenoic(cis) docosatetraenoic, 4,8,12,15,19-docosapentaenoic, docosahexaenoic, tetracosenoic, 4,8,12,15,18,21-tetracosahexaenoic acids, mixtures thereof, and derivatives thereof.

17. A composition as claimed in any one of Claims 13 to 16 wherein said fatty acid or derivative thereof is derived from the group of naturally occurring compounds comprising butter, lard, tallow, grease, herring, menhaden, pilchard, sardine, castor, coconut, corn, cottonseed, jojoba, linseed, liticica, olive, palm, palm kernel, peanut, rapeseed, safflower, soya, sunflower, tall, tung, mixtures thereof and derivatives thereof.

18. A composition as claimed in any one of Claims 13 to 17 further comprising a water insoluble alcohol or derivative thereof.

19. A composition as claimed in any one of Claims 13 to 18 comprising a said emulsifying agent selected from the group consisting of sulfonated petroleum natural acid, sulfated soybean oil, long chain alcohols and complex amines, and a said fatty acid or derivative thereof having a carbon chain length in the range of 8 to 30 carbon atoms, and further comprising a non-water soluble alcohol or derivative thereof selected from glyc3ols, glycerols, sorbitols or derivatives thereof.

20. A composition as claimed in Claim 19 wherein said alcohol is selected from polypropylene glycol and polypropylene glycerol.

21. The use of a lubricant fatty acid or fatty acid derivative as a well fluid additive.

22. Use as claimed in Claim 21 of erucic acid or a derivative thereof.

EP 0 652 271 A1

**European Patent Office**

# EUROPEAN SEARCH REPORT

Application Number

EP 94 30 8305

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y,D | EP-A-0 453 625 (BAKER-HUGHES) <br> * page 4, line 22 – page 5, line 13 * <br> * examples III-X * <br> * claims 1-18 * <br> --- | 1-22 | C09K7/00 <br> C09K7/06 <br> C09K7/02 |
| Y | US-A-4 631 136 (R.W.JONES) <br> * column 1, line 8 – line 27 * <br> * column 3, line 32 – column 4, line 54 * <br> * column 5, line 9 – line 39 * <br> --- | 1-22 | |
| A | GB-A-2 087 952 (VEB FETTCHEMIE) <br><br> * page 1, line 3 – line 54 * <br> * page 1, line 100 – line 117 * <br> ----- | 1,9-17, 21,22 | |
| | | | TECHNICAL FIELDS SEARCHED (Int.Cl.6) <br><br> C09K |

The present search report has been drawn up for all claims

| Place of search | Date of completion of the search | Examiner |
|---|---|---|
| THE HAGUE | 31 January 1995 | Boulon, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

27